# EUROPEAN PATENT SPECIFICATION

(11) **EP 0 675 624 B1**
(45) Date of publication and mention of the grant of the patent: **14.11.2001**
(21) Application number: 95301941.1
(22) Date of filing: 23.03.1995
(51) Int. Cl.: H04M 3/30

(54) **Telecommunication customer interface**
Schnittstelle für Telekommunikationsteilnehmer
Interface d'abonné de télécommunication

(30) Priority: 29.03.1994 GB 9406212
(43) Date of publication of application: 04.10.1995
(73) Proprietor: MARCONI COMMUNICATIONS LIMITED, Coventry, CV3 1HJ (GB)
(72) Inventor: Chopping, Geoffrey, Wimborne, Dorset, BH21 4HD (GB)
(74) Representative: Branfield, Henry Anthony

(56) References cited:
- EP-A- 0 202 648
- EP-A- 0 208 327
- AU-B- 494 731
- DE-A- 3 135 561
- FUNKSCHAU, no. 14, 28 June 1991 MUNCHEN DE, pages 56-59, R.WIECHERS 'EIN NEUER STANDARD VERANDERT DIE WELT'

## Description

The present invention relates to a test apparatus for testing access links in a dial-up telecommunications network

Dial-up telecommunication services have been principally concerned with providing low bandwidth circuits capable of carry speech. Non dial-up telecommunications services have been provided as permanent private circuits providing various bandwidths. Many of these private circuits are operable to convey digital bit streams. Because the data carried by many of these digital private circuits are supplied by their associated customers, a telecommunications service operator of the circuits does not have any control over data transported through the circuits. The operator therefore may have no opportunity for routinely inserting known data formats in order to ensure that the bit streams are being correctly transported through the circuits.

In a European patent application EP 0 208 327 A1, a subscriber connection in a digital link between an exchange and a subscriber terminal is described. In the connection, a code violation monitor is permanently connected to a first line outgoing from the exchange. An output from the monitor providing error pulses is connected via a switching arrangement to a second line incoming to the exchange. An output at a subscriber end of the connection is connected to an exchange-controlled loop switch for selective connection of the subscriber to the exchange. The arrangement provides the capability of monitoring the subscriber connection and thus quality of communication between the exchange and the subscriber with little additional operational expenditure. In the monitor, error monitoring occurs continuously when the connection is in operation.

In a German patent application DE 31 35 561 A1, a process is described for routinely testing digital long distance communication links. The process is distinguished in that testing is performed in a period when the links are not actively conveying speech data. Testing is performed by conveying special data from an exchange through the links to a client and back to the exchange again; such testing enables a bit error rate for the links to be determined.

In an Australian patent AU-B-494 731, there is disclosed a test apparatus for testing access links in a dial-up telecommunications network. The test apparatus comprises means for transmitting a known sequence during periods where communication traffic is relatively low, and a loop test unit operable upon receiving and detecting the known test sequence to generate a corresponding modified version of the test sequence.

Although new multiplexing techniques often involve extra data being carried for enabling suitable performance measuring to be performed, such multiplexing techniques are often not suitable on certain parts of telecommunications networks and in particular on the access interfaces to subscriber's premises.

According to the present invention, there is provided a test apparatus for testing access links in a dial-up telecommunications network, the network comprising:
(a) an exchange including call control means;
(b) a plurality of customer line terminations, each termination connected through a respective access link to the exchange, the link operable to carry data between the exchange and the termination; and
(c) signalling link means for conveying instructions from the call control means for controlling connection of the terminations to the exchange,
   and the apparatus comprising:
(d) testing means for transmitting, when no call is in progress, a known test sequence over an access link to be tested towards its corresponding customer line termination;
(e) a loop test unit connected to the access link to be tested such that the unit is located at the premises of its associated line termination, said unit being operable upon receiving and detecting the known test sequence to generate a corresponding modified version of the test sequence in response and transmit the modified version over the access link to be tested to the exchange; and
(f) analysing means for analysing the modified version of the sequence received at the exchange to check performance in both transmission directions of the access link to be tested,
characterised in that the loop test loop unit is operable to monitor the known test sequence for a defined period to determine thereby that no call is in progress before commencing to generate and transmit the modified version of the sequence over the access link to be tested to the exchange.

The invention provides the advantage that the apparatus is capable of being used in telecommunications networks for which alternative error bit measurement methods are not suitable.

Embodiments of the invention will now be described, by way of example only, with reference to the following diagrams in which:
- Figure 1: is a diagrammatic representation of a telecommunications network comprising an exchange, a subscriber's digital line terminal, and transmission and signalling links linking from the exchange to the subscriber's terminal;
- Figure 2: is a diagrammatic representation of a digital line termination of the exchange including means for test pattern insertion and also for performing test pattern monitoring; and
- Figure 3: is a diagrammatic representation of a test loop unit including means for providing a test loop in the network and for performing test pattern monitoring.

These aforementioned diagrams and the following description are concerned with a primary rate 2048 kbits/s transmission although the present invention is also applicable to other rates of transmission.

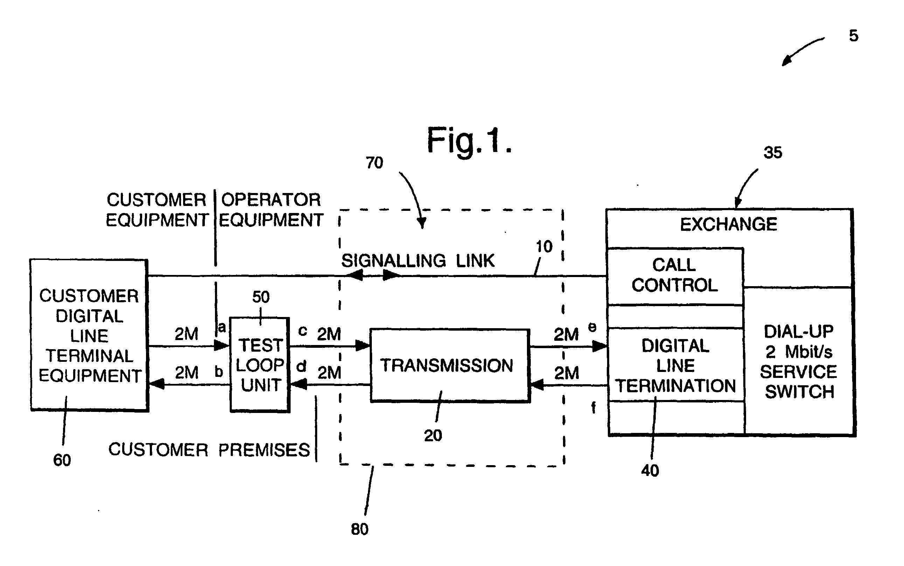

Referring now to Figure 1, there is shown a telecommunications network indicated generally by 5. The network 5 comprises a signalling link 10, a 2048 kbits/s link 20, an exchange indicated by 35 including a digital line termination 40, a test loop unit 50 and customer digital line termination equipment 60. The terminal equipment 60 is connected through the signalling link 10 to the exchange 35. Moreover, the terminal equipment 60 is connected via the test loop unit 50 through the transmission link 20 to the digital line termination 40 of the exchange 35.

The links 10, 20 function as dial-up links and will be referred to as a 2 Mbits/s link indicated generally by 70 and included within a dotted line 80.

When the 2 Mbits/s link 70 is carrying customer traffic, the traffic may be conveyed using one of many possible types of format. Unlike a permanent private circuit which can be carrying continuous customer traffic, the 2 Mbits/s dial-up link 70 is not always carrying customer traffic.

A conventional subscriber low-bandwidth analogue copper pair is operated in a reduced power state when not in use carrying customer traffic; in contrast, 2 Mbits/s lines in communication systems normally stay fully powered even when not carrying useful customer traffic. Consequently, the link 70 regularly has no call in progress when used for a dial-up 2 Mbits/s service.

In the case of an ordinary analogue call, a subscriber making the call can ring off in order to clear the call if the subscriber believes the call has become disconnected or the connection quality is too bad. Similarly, subscriber equipment making a call through a 2 Mbits/s transmission link may initiate a clear via an associated parallel signalling link if the subscriber equipment detects that the transmission link is no longer satisfactory. Means for operating a parallel signalling link are described in a United Kingdom patent application no. GB 931 9449.6. Whenever a clear is actioned, the result is that there is no call in progress. Therefore, there arises an opportunity to test 2 Mbits/s circuits from an associated exchange through to corresponding subscriber's premises while there are no calls in progress; this is an important aspect of the present invention.

In the network 5, once a call control function has determined that there is no call in progress, the exchange digital line termination 40 can be instructed to continuously insert a defined test sequence into traffic flowing between the line termination 40 and the test loop unit 50.

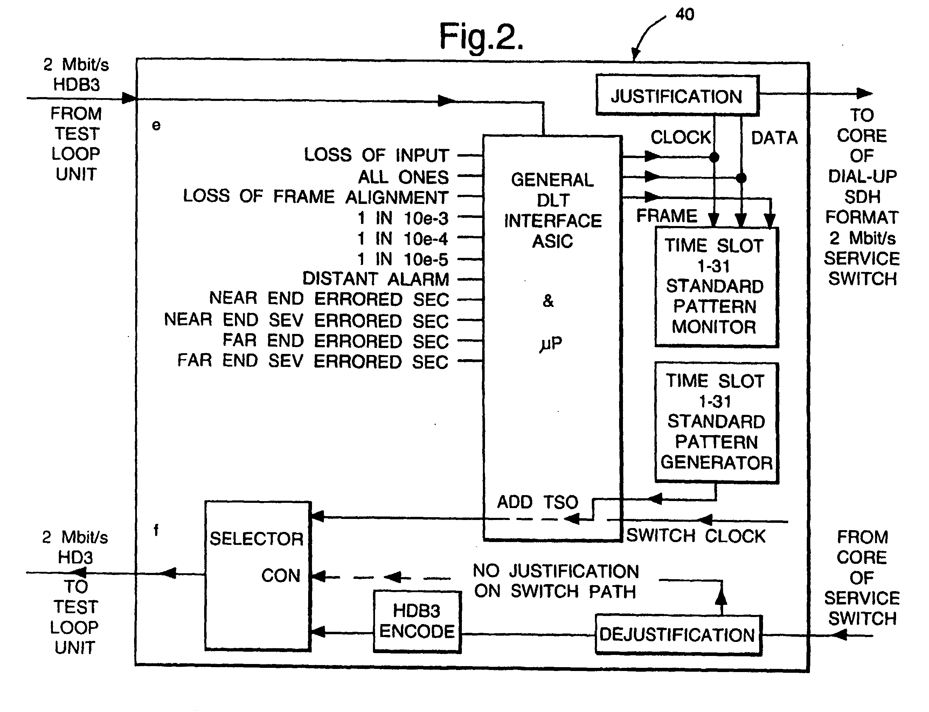

Referring now to Figure 2, there is shown the digital line termination 40. This termination 40 provides means by which call control in the network 5 can indicate to the termination 40 that there is no call in progress. The means provides such indication by clearing a path across a digital switch of the termination 40 such that the switch outputs an idle pattern which is clearly distinguishable from normal traffic which propagates along the path when the path is established for conveying a call. For example, when the network 5 is conveying actual calls to the terminal equipment 60, SDH data formats can be employed in traffic passing through the transmission link 20; the idle patterns conveyed through the transmission path 20 when calls are not in progress are chosen so that they cannot imitate the SDH formats.

The idle pattern can include a formatted test sequence based on a G. 704 format of 32 time slots with a 4-bit cyclic redundancy (CRC-4) check comprising:
(a) a time slot zero containing a frame alignment signal as well as a CRC-4 multiframe and correct CRC-4 check sums for transmitted data from the termination 40; and
(b) further 31 time slots containing standard and recognisable patterns.

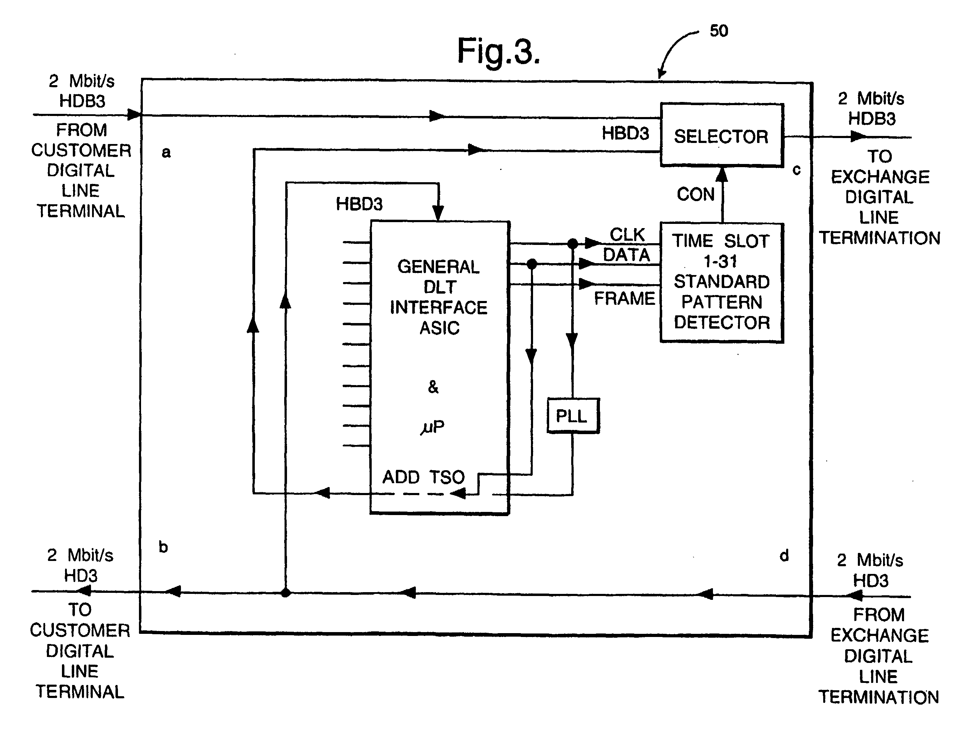

Referring now to Figure 3, the test loop unit 50 functions as part of an access network from the exchange 35 to the customer. The unit 50 is not part of the customer's digital line terminal 60, although it is appropriate to site the test loop unit 50 at the customer's premises. The test loop unit 50 includes means for recognising the test sequence inserted by the digital line termination 40. When the test loop unit 50 has been continuously receiving the test sequence for longer than defined period of time, the unit 50 replaces a digital stream output from the customer's terminal equipment 60 directed to the exchange 35 with a modified form of the test sequence; the unit 50 directs the modified form of the test sequence back to the exchange 35. The modified form of the test sequence differs from the test sequence output from the termination 40 in that the time slot zero contains a new frame alignment signal as well as a CRC-4 error multiframe and correct CRC-4 check sums for the transmitted data. Also included in the time slot zero are any remote alarm indication signals and CRC-4 error indication bits relating to the 2 Mbits/s interface received by the test loop unit 50 from the digital line termination 40 at the exchange 35.

From the received time slot information including the remote alarm indication signals as well as the CRC-4 bits and CRC-4 error indication bits, the digital line termination 40 can determine the error performance for both directions of transmission of the link 70 from the digital line termination 40 as far as the test loop unit 50 at the customer's premises.

## Claims

1. A test apparatus for testing access links in a dial-up telecommunications network (5), the network (5) comprising:
(a) an exchange (35) including call control means;
(b) a plurality of customer line terminations (60), each termination (60) connected through an access link (20) to the exchange (35), the link (20) operable to carry data between the exchange (35) and the termination (60); and
(c) signalling link means (10) for conveying instructions from the call control means for controlling connection of the terminations (60) to the exchange (35),
and the apparatus (40, 50) comprising:
(d) testing means (40) for transmitting, when no call is in progress, a known test sequence over an access link (20) to be tested towards its corresponding customer line termination (60);
(e) a loop test unit (50) connected to the access link (20) to be tested such that the unit (50) is located at the premises of its associated line termination (60), said unit (50) being operable upon receiving and detecting the known test sequence to generate a corresponding modified version of the test sequence in response and transmit the modified version over the access link (20) to be tested to the exchange (35); and
(f) analysing means for analysing the modified version of the sequence received at the exchange (35) to check performance in both transmission directions of the access link (20) to be tested,
**characterised in that** the loop test unit (50) is operable to monitor the known test sequence for a defined period to determine thereby that no call is in progress before commencing to generate and transmit the modified version of the sequence over the access link (20) to be tested to the exchange (35).

2. A test apparatus according to Claim 1 wherein:
(a) the call control means is operable to indicate to the testing means that no call is in progress by clearing a switch path across a service switch of the exchange (35); and
(b) the known test sequence is an idle pattern which is selected to be significantly different in format from a normal call traffic format.

3. A test apparatus (40, 50) according to Claim 1 or 2 wherein the known test sequence is derived from a G. 704 format of 32 time slots including a 4-bit cyclic redundancy CRC-4 check, the sequence including a time slot zero containing a frame alignment signal as well as a CRC-4 multiframe and CRC-4 check sums including patterns recognisable by the network (5).

4. A test apparatus according to Claim 3 wherein the modified version of the sequence differs from the known test sequence in that the modified version includes a new frame alignment signal and a CRC-4 error multiframe and CRC-4 check sums.

5. A test apparatus according to any one of Claims 1 to 4 wherein the known test sequence is based on a 2048 kbits/s frame format.

## Patentansprüche

1. Prüfapparat zum Prüfen von Zugriffsleitungen in einem Wähltelekommunikationsnetz (5), wobei das Netz (5) aufweist:
a) eine Vermittlungsstelle (35) mit Rufsteuereinrichtungen ;
b) mehrere Teilnehmerleitungsanschlüsse (60), wobei jeder Anschluß (60) über eine Zugriffsleitung (20) mit der Vermittlungsstelle (35) verbunden ist, wobei die Zugriffsleitung (20) Daten zwischen der Vermittlungsstelle (35) und dem Anschluß (60) überträgt; und
c) Zeichenabgabeverbindungseinrichtung (10) zur Förderung von Signalen von der Rufsteuereinrichtung zur Steuerung der Verbindung zwischen den Anschlüssen (60) und der Vermittlungsstelle (35),
und wobei der Apparat (40, 50) aufweist:
d) eine Prüfeinrichtung (40) zur Übertragung, wenn kein Anruf weitergeleitet wird, einer bekannten Prüfsequenz über eine zur prüfende Zugriffsleitung (20) zu Ihrem betreffenden Teilnehmerleitungsanschluß (60);
e) eine Schleifenprüfeinheit (50), die mit der zu prüfenden Zugriffsleitung (20) verbunden ist, derart, daß die Einheit (50) sich an dem Ort des zugehörigen Leitungsanschlusses (60) befindet, wobei die Einheit (50) betätigt wird, wenn sie die bekannte Prüfsequenz empfängt, um als Antwort eine entsprechende modifizierte Version der Prüfsequenz zu bilden und diese modifizierte Version über die zu prüfende Zugriffsleitung (20) und die Vermittlungsstelle (35) zu übertragen; und
f) eine Analyseeinrichtung zum Analysieren der abgeänderten Version der Sequenz, die von der Vermittlungsstelle (35) empfangen worden ist, um die Arbeitsweise der Zugriffsleitung (20), die geprüft werden soll, in beiden Übertragungsrichtungen zu überprüfen,
**dadurch gekennzeichnet,**
**daß** die Schleifenprüfeinheit (50) derart arbeitet, daß sie die bekannte Prüfsequenz während eines definierten Zeitabschnitts überwacht, um dadurch festzustellen, daß kein Anruf weitergeleitet wird, bevor sie beginnt, die modizifizierte Version der Sequenz zu bilden und über die zu prüfende Zugriffsleitung (20) an die Vermittlungsstelle (35) zu übertragen.

2. Prüfapparat nach Anspruch 1,
**dadurch gekennzeichnet:**
a) daß die Rufsteuereinrichtung derart arbeitet, daß sie der Prüfeinrichtung anzeigt, daß kein Anruf weitergeleitet wird, indem sie einen Schaltweg über einen Dienstleistungsschalter der Vermittlungsstelle (35) freimacht und
b) daß die bekannte Prüfsequenz ein unbelegtes Muster aufweist, das derart ausgewählt ist, daß es sich erheblich im Format von einem normalen Anrufaverkehrsformat unterscheidet.

3. Prüfapparat (40, 50) nach Anspruch 1 oder 2,
**dadurch gekennzeichnet,**
**daß** die bekannte Prüfsequenz von einem G.704 Format mit 32 Zeitschlitzen abgeleitet ist, die eine zyklische 4-Bit-Redundanz-CRC-4-Prüfung enthält, wobei die Prüfsequenz einen Zeitschlitz 0 aufweist, der ein Rahmenkennungswort, ebenso wie ein CRC-4-Mehrfachrahmensignal und CRC-4-Prüfsummensignale enthält, einschließlich Mustern, die von dem Netzwerk (5) erkannt werden.

4. Prüfapparat nach Anspruch 3,
**dadurch gekennzeichnet,**
**daß** die modifizierte Version der Sequenz sich von der bekannten Prüfsequenz dadurch unterscheidet, daß die modifizierte Version ein neues Rahmenkennungswort und ein CRC-4-Fehlermehrrahmensignal und CRC-4-Prüfsummensignale aufweist.

5. Prüfapparat nach einem der Ansprüche 1 bis 4,
**dadurch gekennzeichnet,**
**daß** die bekannte Prüfsequenz auf einem 2048 Kilobit/s Rahmenformat beruht.

## Revendications

1. Dispositif de test pour tester des liaisons d'accès dans un réseau automatique de télécommunications (5), le réseau (5) comportant :
(a) un central téléphonique (35) comportant des moyens de commande d'appel,
(b) une pluralité de terminaisons de ligne client (60), chaque terminaison (60) étant connectée à travers une liaison d'accès (20) au central téléphonique (35), la liaison (20) étant opérationnelle pour transporter des données entre le central téléphonique (35) et la terminaison (60), et
(c) des moyens de liaison de signalisation (10) pour transporter des instructions depuis les moyens de commande d'appel pour commander une connexion des terminaisons (60) au central téléphonique (35),
et le dispositif (40, 50) comportant
(d) des moyens de test (40) pour transmettre, lorsqu'aucun appel n'est en cours, une séquence test connue sur une liaison d'accès (20) à tester en direction de sa terminaison de ligne client correspondante (60),
(e) une unité de test en boucle (50) connectée à la liaison d'accès (20) à tester de sorte que l'unité (50) est située au niveau des locaux de sa terminaison de ligne associée (60), ladite unité (50) étant opérationnelle lors de la réception et de la détection de la séquence test connue pour générer en réponse une version modifiée correspondante de la séquence test et transmettre la version modifiée sur la liaison d'accès (20) à tester vers le central téléphonique (35), et
(f) des moyens d'analyse pour analyser la version modifiée de la séquence reçue au niveau du central téléphonique (35) pour contrôler la performance dans les deux directions de transmission de la liaison d'accès (20) à tester, **caractérisé en ce que** l'unité de test en boucle (50) est opérationnelle pour surveiller la séquence test connue pendant une période définie afin de déterminer qu'aucun appel n'est en cours avant de commencer à générer et transmettre la version modifiée de la séquence sur la liaison d'accès (20) à tester vers le central téléphonique (35).

2. Dispositif de test selon la revendication 1, dans lequel :
(a) les moyens de commande d'appel sont opérationnels pour indiquer aux moyens de test qu'aucun appel n'est en cours en libérant un trajet de commutation à travers un commutateur de service du central téléphonique (35), et
(b) la séquence test connue est un modèle libre qui est sélectionné pour être nettement différent en termes de format d'un format de trafic d'appels normal.

3. Dispositif de test (40, 50) selon la revendication 1 ou 2, dans lequel la séquence test connue est dérivée d'un format G. 704 de 32 créneaux temporels incluant un contrôle de redondance cyclique CRC-4 de 4 bits, la séquence comportant un créneau temporel zéro contenant un signal d'alignement de trames, ainsi qu'une multitrame CRC-4 et des sommes de contrôle CRC-4 incluant des modèles reconnaissables par le réseau (5).

4. Dispositif de test selon la revendication 3, dans lequel la version modifiée de la séquence est différente de la séquence test connue en ce sens que la version modifiée comporte un nouveau signal d'alignement de trames et une multitrame d'erreur CRC-4 et des sommes de contrôle CRC-4.

5. Dispositif de test selon l'une quelconque des revendications 1 à 4, dans lequel la séquence test connue est basée sur un format de trame de 2048 kbits/s.
